(19) Europäisches Patentamt

European Patent Office

Office européen des brevets

(11) **EP 1 398 733 A1**

(12) **EUROPEAN PATENT APPLICATION**

(43) Date of publication:
**17.03.2004 Bulletin 2004/12**

(51) Int Cl.⁷: **G06T 5/20**

(21) Application number: **02020473.1**

(22) Date of filing: **12.09.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **GRETAG IMAGING Trading AG
5430 Wettingen (CH)**

(72) Inventor: **Schröder, Michael
8038 Zürich (CH)**

(74) Representative: **Schwabe - Sandmair - Marx
Stuntzstrasse 16
81677 München (DE)**

(54) **Texture-based colour correction**

(57)    A method for correcting a colour image, wherein the image being represented by a plurality of colour values, the method comprising the steps of: determining local texture features of the image based on the colour values; and correcting the colour values based on the local texture features.

**Fig. 1**

**Description**

The present invention relates to colour correction, in particular applied to correct colours of (still or moved) photographic images. The invention is directed to a colour correction method, a camera, a printer, and/or a photographic laboratory, and a program corresponding to the method.

In digital camera processing and in photographic printing, it is a standard technique to estimate the white balance in a scene by assuming the integral densities in each colour channel to be equal, that is, to assume that on the average the scene is grey. This algorithm, which is called "grey world" method, works reasonably well for average scenes, but might be very unreliable for certain other scenes.

Other well-known algorithms are the "Retinex method" [E. Land and J. McCann. Lightness and Retinex Theory. Journal of the Optical Society of America, 61 (1): 1 -11, 1971], "colour by correlation" [G. Finlayson, P. Hubel, and S. Hordley. Colour by correlation. In Fifth IS&T Colour Imaging Conference, Scottsdale, pages 6-11, 1997], and the estimation of the white balance using neural networks (US 5,907,629). These techniques provide sophisticated techniques for estimating the white balance in a given colour image. However, none of these techniques makes use of local texture information.

EP 1 014 695 A2 is based on the assumption that the standard deviations in each colour channel, particularly of high frequency spatial information, should be equal. The high frequency spatial components in each colour channel are calculated separately and colour correction factors are obtained by comparing the different components.

The object of the invention is, to allow a colour correction of the image based on image properties, in particular to allow an adjustment of the colour balance based on image properties.

The afore-mentioned object is solved by the subject matter of claims 1 and 7 to 10. The dependent claims are directed to embodiments of advantage.

The present invention is in particular directed to the processing of digital image data and in particular to a method for automatically adjusting the colour balance in a digitized colour image, thereby removing colour casts. The colourcasts may, for instance, originate from unknown scene illuminations, from wrong colour processing or from the transformation from an unknown colour space. Advantageously, the present invention has the capability of estimating the unknown illumination of a scene. The invention may be implemented as an apparatus for adjusting the white balance in a digital video or still camera.

The image may be, for instance, a bitmap image, which consists of a plurality of pixels. A colour value is preferably assigned to each pixel. Colour values may be represented in different colour spaces, for instance, RGB, CIE Lab, CIE XYZ, or RGBs. The colour value is usually defined by a set of values, which are herein called "element values". The set of element values may, for instance, define a vector in the colour space, which allows defining a colour value. For instance, r, g, and b represent element values in the RGB colour space, and L, a, and b represent element values in the Lab colour space. The element values, which define a colour value, respectively belong to a colour channel. For instance, r belongs to the R colour channel in case of RGB and L belongs to the L colour channel in the case of Lab colour space.

The term "textures" in an image represents a term used in the art. For instance, a "textured" image is the opposite of a homogeneous image where all pixels have the same colour value. In other words, textures may represent the structures in the image. Examples for a mathematically definition of "texture" are given below. Further examples and definitions for "texture" can be found in "Textures - A Photographic Album for Artists and Designers" by Phil Brodatz, General Publishing Company, Ltd., 1996 and are herewith included by reference.

Preferably first a luminance image is calculated, in which textured regions are detected by using (possibly very sophistaced) texture measures. Then the detected regions are used to analyze presumably common properties of the different colour channels.

According to the invention, texture features are determined locally based on the colour values. Preferably the determined local texture features represent a measure for the texture at a particular location e.g. represent the degree or amount of texture or whether there is texture or not with respect to the particular location. Preferably, at least one texture feature is determined for one location of the image. Preferably, the determined at least one texture feature is assigned to this location (section or sub-region) of the image. Thus, the determination of texture features may, for instance, result in a matrix, each matrix element being assigned to a particular location (section or region) of the image and each element representing at least one texture feature (e.g. representing a texture measure). The "local texture features" respectively represent at least one texture feature for the respective locations (regions, sections) in the image. In particular, the local texture features define a texture measure for (each of) the respective locations. Thus, there is a plurality of local texture features, which describe locally the texture of the image.

Preferably, the local texture features are determined based on the colour values, which correspond to the same location (section or region) of the image. Preferably, in order to reduce the processing load, a coarse version of the image is processed in order to obtain the local texture features. The coarse version of the image may be obtained e.g. by down-sampling, filtering or averaging.

Preferably, the local texture features are determined based on the colour values. Preferably, the determination is performed automatically and/or by means of (mathematical) calculation, in particular based on a mathematical definition of local texture features.

Preferably, the colour values are corrected based on the local texture features. Preferably, the correction is performed in dependence on (uncorrected) colour values. Preferably, also in this case the colour values are derived from a coarse image, which may be achieved by down sampling or filtering or any other method, which reduces the amount of data.

Preferably, the colour values are corrected channel-wise, e.g. for (most or) all element values of a colour channel, the same correction is applied. This is in particular of advantage, if the colour balance of an image is corrected. Alternatively or additionally, in case of an additional local colour correction is desired, the colour values may be corrected based on the corresponding local texture features.

Preferably, the element values of the respective colour channels are corrected based on both the (uncorrected) element values and the local texture features.

Preferably, the local texture features are based on element values of different colour channels. Preferably, those element values belong to different colour channels, however, relate to the same location (section or region) to which the local texture features relate. With respect to a particular location (region, section) one or more local texture features may be calculated based on (most or all) element values, which define the one or more colour values at that location (section, region).

Preferably, the element values of different channels are (mathematically and/or automatically) combined in order to calculate a single value. For instance, the luminance value may be calculated from a set of element values. Then, based on the luminance values, which relate to a particular location (section or region), at least one local texture feature (of this location) may be calculated.

Preferably, the local texture features are used in order to define or set the influence of the respective colour values or element values on the correction procedure. Preferably, for this purpose the element values or colour values are combined with the local texture features, e.g. automatically and/or mathematically. Preferably those colour values or element values and local texture features are combined, which relate to the same location. In this way, it is possible to give those colour values or element values a higher weight for the colour correction, which are considered to represent a more valuable information with respect to colour correction. In this way it may be avoided that objects, which dominate an image and which are homogenous in colour like a blue-sky result in negative effect when correcting the colour balance. In particular, it is assumed in accordance with the invention that textured regions have a higher probability to comply with the "grey world" assumption mentioned above than untextured regions. An exception to this assumption may be regions, which represent "critical scene content", e.g. relate to memory colours like skin and vegetation. These regions may be textured but still may dominate the overall colour impression. In view of this, "critical scene content" regions, e.g. memory colour regions, regions with text inscriptions, regions showing wood, regions showing a sunset etc. are treated differently as explained below.

In summary, it represents an essential idea of the present invention that the influence of the local colour values or element values on a (total) colour correction, which has an influence on the whole image, is changed or altered in dependence on corresponding local texture features, wherein "corresponding" means that a local texture feature of one location controls the influence of the colour value or element values of the same one location on the correction.

As mentioned above, memory colours may have a negative effect on the colour correction, in particular the correction of the colour balance of a colour image. Assuming, for instance, that an image is dominated by green vegetation and that the vegetation is textured. Then, this would even have a negative effective on colour correction if the above new processing regime were used. In order to avoid this problem, the image is preferably analyzed for memory colours (or often critical scene content) and preferably regions are identified, in which those memory colours (or other critical scene content) are located. The identification of memory colours may be, for instance, performed by assigning a particular range of colour values to a particular memory colour (e.g. skin tone). Those regions, which consist of adjacent pixels having colour values within those ranges, are identified as a memory colour region of particular memory colour.

Preferably, according to the invention the image is analyzed with one or more regions represent a memory colour region. The result of the analyzation may be a simple yes or no or may be, for instance, a probabilistic statement. Preferably, there are analyzation results for all locations in the image, where colour values or element values are combined with local texture features for performing the correction. In other words, the combination of the local colour values and the local element values with the corresponding local texture features depends on the corresponding local analysis result.

With respect to other critical scene content, for instance, information on location and colour of text inscription may be used in order to avoid an influence of the text inscriptions on the colour correction e.g. by not-basing the colour correction on colour values and texture features of text inscription regions.

Below an additional or alternative approach is discusses, which allows to avoid negative effects of memory colours in case a colour balance is to be achieved.

Preferably, channel characteristics for the colour channels are determined. The channel characteristics represent preferably a kind of "energy" or "influence" which the colour channel has in the process of colour correction. For instance, colour channels representing intense colour values and which are often located at textured locations, have a higher "channel energy" and thus a higher influence on colour correction. Preferably the channel characteristics are represented by values but may also be represented by, for instance, vectors or matrices or any other kind of mathematically expression. Preferably, the channel characteristic of a particular colour channel is determined (e.g. automatically calculated) based on the element values of the particular colour channel and the local textures, which correspond to these element values.

Preferably, based on the channel characteristics, the colour values of the image are corrected. Preferably, this correction is performed by correcting the element values of the colour channels differently. Preferably, the element values of each respective colour channel are corrected based on the channel characteristic of the corresponding colour channel. Preferably, the correction is additionally based on predetermined reference relationships, which are defined between the channel characteristics, i.e. there are target relationships for the channel characteristics (e.g. predefined ratios between values representing the channel characteristics). In other words, if the channel characteristic of a particular colour channel deviates in its relationships to the other channel characteristics from predetermined reference relationships, the element values of the colour channels are changed in order to minimize or eliminate this deviation from the reference relationships. Preferably, the change of the element values of a colour channel is performed in the same way for all (or most) element values, e.g. by multiplying all (or most) element values by the same factor or by subjecting them to the same mathematical function.

The above predetermined reference relationships preferably represent a target colour balance, e.g. the above-mentioned "grey world" assumption. In other words, if the relationships among the channel characteristics imply that the image is overall a grey image, no colour correction is to be performed.

In the above-mentioned embodiment, the channel characteristics are a representation of the colour channel, which is "cleaned" from misleading effects like dominating regions of homogeneous colour (or critical scene content), which do not comply with the "grey world" assumption.

Another alternative or additional approach may be to calculate, based on the information on local texture features, the influence of colour values, which relate to non-textured locations or critical scene content on a deviation from the grey world assumption. In other words, the predetermined reference relationships (which represent the grey world assumption) may be changed in dependence on the colour values and frequency (number or abundance) of non-textured (or only partly textured) locations. This method may be, for instance, combined with the above-mentioned embodiment for the considerations of memory colours or other information on critical scene content. For instance, in the case of identification of memory colours, the predetermined reference relationships among the channel characteristics may be amended in dependence on the colour value and frequency (number or abundance) of the locations, which relate to memory colours.

As mentioned above, it represents a major idea of the present invention that the colour balance of an image is corrected in dependence on memory colours (or information on other critical scene content) present in the image. Therefore, the present invention is also directed to a method for correcting the colour balance of an image, wherein the image is analyzed for memory colours, in particular as discussed above. Preferably, the image is analyzed for identifying one or more regions representing a memory colour region. Preferably, the colour correction, in particular the correction of the (white or grey) colour balance of the image is performed in dependence on the analysis result. Preferably, this correction is performed channel-wise, i.e. the element values of the same colour channel are corrected in the same way, e.g. by multiplication of a factor or by subjecting the element values to the same function.

For instance, reference relationships may define target relationships among the integrated colour channels. The integrated colour channels may represent an integration of their element values. Depending on the frequency (number or abundance) of locations, identified as colour memory locations and in dependence on their colour, the reference relationships may be changed.

Advantageously, this invention provides a colour transformation that removes the existing colour cast in a digital colour image, thereby resulting in an improved image with an adjusted colour balance.

The method of calculating the colour transformation is preferably based on the assumption of certain common properties of textured regions in the image.

The invention provides a method of colour balance correction comprising preferably at least one of the following steps:

- obtaining the image from an input device and storing it in memory;
- down-sampling the image to a standardized analysis resolution;
- converting the image to a luminance image;
- applying at least one texture feature extraction method that locally calculates texture features over the whole image;

- applying a classificator that classifies all image locations into pre-defined texture classes, resulting in a texture weighting mask;
- calculating properties of each colour channel in the regions classified as textured;
- calculating reference properties from the properties of each channel;
- determining the colour correction transformation by comparing the properties of each channel with the reference properties;
- applying the colour correction transformation to the coloured image in order to obtain the improved image.

There exists a variety of texture features that can be used to obtain descriptions of the local spatial information, as will be discussed below. Similarly, there exists a manifold of properties that can be derived from the textured regions and used to obtain the colour correction transformation, as will be discussed below.

After applying the method of this invention to a colour image, advantageously existing colour casts will be removed and its global colour balance will be restored.

In comparison to other methods of prior art, the invention analyses information in textured regions of the image, thereby avoiding the negative effects resulting from one (or several) dominating objects in the image (such as an image dominated by blue sky) on the extracted properties that are being used to derive the colour correction transformation.

Further embodiments and features are disclosed in the following detailed description of the invention.

Fig. 1    shows an overview of a preferred colour correction algorithm of the present invention;
Fig. 2    gives an example of a texture-weighting mask;
Fig. 3    shows an extension of the classification step 80 of fig. 1 for memory colours.

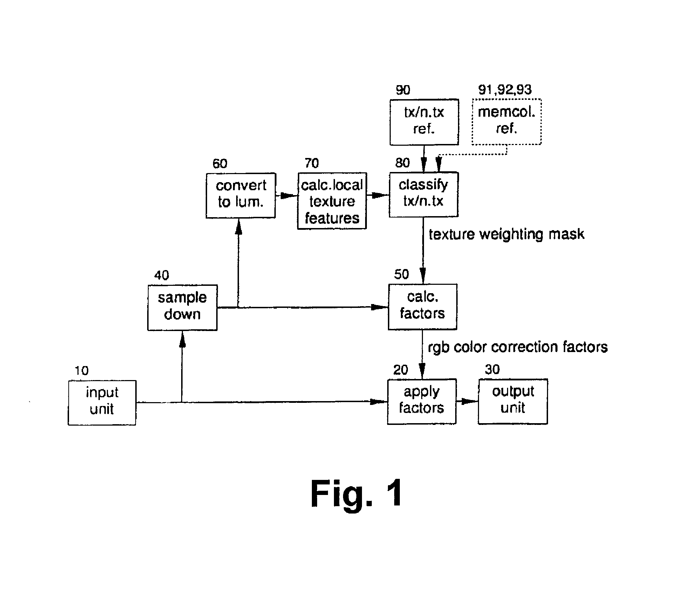

In Fig. 1, an overview of an embodiment of a new colour correction algorithm is provided. The algorithm is based on the calculation of local texture features and the classification into "textured" and "not textured" regions.

First the image is read into memory by the input unit, 10. The input image can be any kind of digitised image, such as an image stored on disk, a scanned negative or slide, an image taken with a CCD/CMOS sensor, or an artificially generated image.

Similarly, in the output unit, 30, the image can be transferred to any output device: e.g., printed on a photographic or inkjet printer, written to disk or memory card, displayed on screen or a web page, or exposed on a photographic film.

After reading in by the input unit, the image is scaled down, 40, to a certain fixed resolution (e.g., to a maximum height and width of 320 pixels) in order to guarantee reproducible results in the following texture description step. The method of scaling down to that coarser resolution without introducing any artefacts is state of the art in digital image processing [A. Jain. Fundamentals of Digital Image Processing. Prentice-Hall International, 1989].

The analysis of the (downscaled) image using local texture features, 60/70/ 80/ 90, is an essential part of the embodiment and explained in detail below. It provides us with a texture-weighting mask, that specifies those locations of the image that will be used in the subsequent calculation of the colour correction transformation, 50 (see below).

The colour correction transformation (consisting of one gain factor for each colour channel) is applied, 20, to the full image as it is read by the input unit. Depending on the used colour space, a power law transformation has to be applied before and after applying the colour correction.

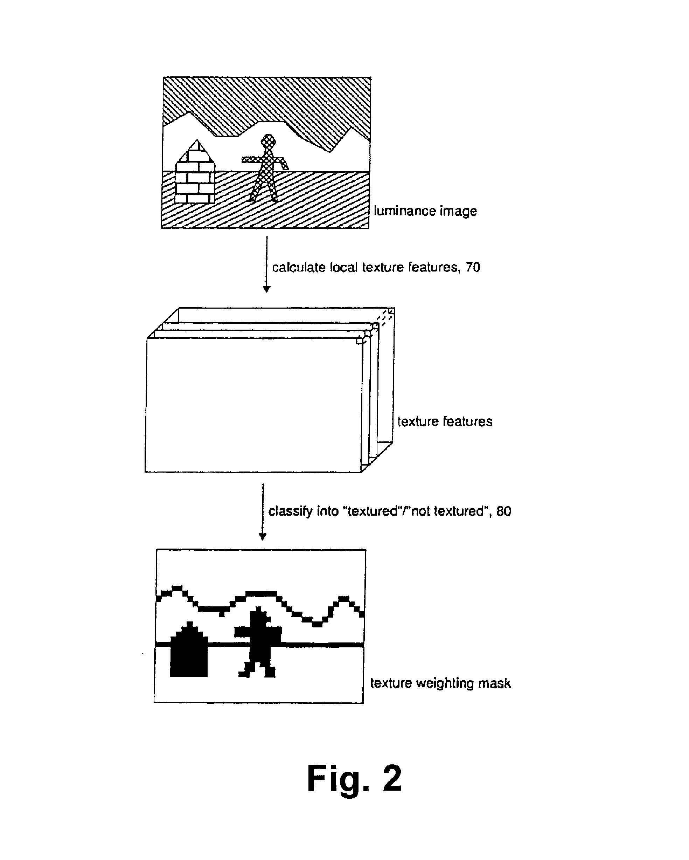

An important step of the embodiment is the extraction of the texture-weighting mask. The purpose of the "texture-weighting mask" is to specify those regions in the image that actually contain spatial information. It is obtained as depicted in the example in Fig. 2, based on the algorithm shown in Fig. 1. At the bottom of Fig. 2 the mask image (bottom) is 1 respectively 0 (denoted by black respectively white) where the original image (top) exhibits respectively does not exhibit spatial structure. (The "1" and "0" represent examples for a texture measure). Thereby the texture mask selects borders between uniform regions of different luminances, but neglects homogeneous regions. This example shows a binary mask. The extension to continuous/fuzzy masks is straightforward.

1. (Fig. 1, 60) First the (downsampled) image is converted to a grey image, in which each pixel value represents e.g. the luminance in the image (such as Y of XYZ or Y of the Ycc colour space). As alternative, the first component of a principal component analysis can be used.

2. (Fig. 1, 70) Then local texture features are calculated that capture information about the spatial distribution of tonal variations in a one-channel image (in our case a luminance image). Examples of definitions of local texture features are given below:

- An example for a local texture feature is the local variance. It quantifies the variation of intensity in the neighbourhood of the pixel under investigation:

$$\sigma_{i,j}^2 = \frac{1}{N} \sum_{i',j' \in \Delta_{i,j}} (x_{i'j'} - \mu_{ij})^2 \qquad (1)$$

with $X_{ij}$ denoting the pixel intensity (e.g. luminance) at position i,j, with $\Delta_{i,j}$ denoting a certain neighbourhood of pixel i,j (e.g., a 5 × 5 square), N being the number of pixels in that neighbourhood and $\mu_{ij}$ being the mean intensity (e.g. mean luminance)

$$\mu_{ij} = \frac{1}{N} \sum_{i',j' \in \Delta_{i,j}} x_{i'j'}. \qquad (2)$$

Note that the local variance only captures the magnitude of variations at a certain image location, but does not actually describe spatial information. The following texture measures, however, actually do that.

- Features based on the gray-level co-occurrence matrix (GLCM,[R. M. Haralick, K. Shanmugan, and I. Dinstein. Textural features for image classification. IEEE Transactions on Systems, Man, and Cybernetics, 3(6):610-621, Nov. 1973]) are among the most frequently used texture features. The GLCM is the matrix of occurrence of relative frequencies of grey level pairs of pixels at certain relative displacements. From this matrix, various features such as contrast, correlation, and entropy can be computed.

- Another class of texture features is given by edge detection algorithms, since texture can be viewed as an ensemble of edges. A remote sensing application for land cover classification in explained in [Christine A. Hlavka. Land-use mapping using edge density texture measures on thematic mapper simulator data. IEEE Transactions on Geosciene and Remote Sensing, GE-25(1):104-108, January 1987].

- Image transformations constitute another powerful class of texture features. First the image is submitted to a linear transform, a filter, or a filter bank, followed by the application of certain energy measures. Examples are Laws filter mask [K. Laws. Rapid texture identification. In Proc. SPIE Conf. Image Processing for Missile Guidance, pages 376-380, 1980], Gabor filter banks [A. K. Jain and F. Farrokhnia. Unsupervised texture segmentation using Gabor filters. Pattern Recognition, 24(12):1167-1186, 1991], and the wavelet transform [S. G. Mallat. A theory for multiresolution signal decomposition: The wavelet representation. IEEE Transactions on Pattern Analysis and Machine Intelligence, 11(7):674-693, July 1989]. A recent review article on this kind of texture features is provided by [Trygve Randen and John Husoy. Filtering for texture classification: A comparative study. IEEE Transactions on Pattern Analysis and Machine Intelligence, 21(4):291-309, 1999].

3. (Fig. 1, 80) The texture feature extraction provides high-dimensional local features, that is, for each part of the image a feature vector of a certain dimensionality (depending on the type of feature used) may be obtained. In the next step, this feature vector is classified into two classes: "textured" and "not textured". This provides the probability

$$p(\text{"textured"}| i,j) \qquad (3)$$

of the pixel i,j being "textured". When using local variance as feature, Eq. (1), a classification can be

$$p(\text{"textured"}|i,j) = \begin{cases} 1 & \text{if } \sigma_{i,j} >= \Lambda, \\ 0 & \text{otherwise,} \end{cases} \qquad (4)$$

with $\Lambda$ being the threshold defining the decision border between "textured" and "not textured". Note that the thresholding in Eq. (4) is just a demonstration of the procedure and its feasibility. For those skilled in the art, it is straightforward [A. Webb. Statistical Pattern Recognition. Arnold, 1999] to derive classification procedures that result in probabilistic (that is, "smooth" or "fuzzy") decisions and avoid the hard decision rule of Eq. (4).

The calculation of the colour correction factors preferably relies on the assumption that certain properties of the red, green, and blue pixels in the "textured" regions of the image have to be equal to represent an image that is properly colour balanced.

As common property, the following quantities can be used:

- mean
- variance
- maximum pixel value (possibly using a cumulative histogram and a percentile threshold)

In the following an example is given, which uses RGB means:

First, for each channel we calculate the weighted mean

$$\bar{R} = \frac{1}{Z} \sum_{i,j} R_{i,j} \cdot p(\text{``textured''}|i,j) \qquad (5)$$

$$\bar{G} = \frac{1}{Z} \sum_{i,j} G_{i,j} \cdot p(\text{``textured''}|i,j) \qquad (6)$$

$$\bar{B} = \frac{1}{Z} \sum_{i,j} B_{i,j} \cdot p(\text{``textured''}|i,j) \qquad (7)$$

where the sum extends over all image pixels i, j and with the normalization

$$Z = \sum_{i,j} p(\text{``textured''}|i,j). \qquad (8)$$

Using the mean intensity values, we can calculate a mean luminance

$$\bar{Y} = 0.2126\,\bar{R} + 0.7152\,\bar{G} + 0.0722\,\bar{B} \qquad (9)$$

and — with the assumption of equal means in the textured regions — the RGB gain factors

$$rf = \bar{Y}/\bar{R}, \quad gf = \bar{Y}/\bar{G}, \quad \text{and} \quad bf = \bar{Y}/\bar{B}. \qquad (10)$$

In more detail, the $R_{i,j}$; $G_{i,j}$; and $B_{i,j}$ are multiplied by rf; gf; and bf, respectively to obtain the transformed $R_{i,j}$; $G_{i,j}$; and $B_{i,j}$, respectively. The transformed average values $\bar{R}'$, $\bar{G}'$, and $\bar{B}'$ are obtained correspondingly. The "assumption of equal means" corresponds to:

$$\bar{R}' = \bar{G}' = \bar{B}' \qquad (11)$$

Using Eq. (9) this results in:

$$\bar{Y}'=\bar{R}'=\bar{G}'=\bar{B}'.$$

If assuming additionally that Y remains constant, i. e. $\bar{Y}' = \bar{Y}$ then Eq. (2) and (4) result in the above Eq. (10).

For certain scene types (e.g., scenes dominated by vegetation), the assumption of common properties (e.g., common RGB mean) does not hold. Therefore, a preferred embodiment of the invention is to incorporate knowledge on critical scene content, such as skin, sky, and vegetation (so-called memory colours), or e.g. on text inscriptions in a particular colour or on graphical structures or pattern in a particular colour, into the classification step (Fig. 1, 80).

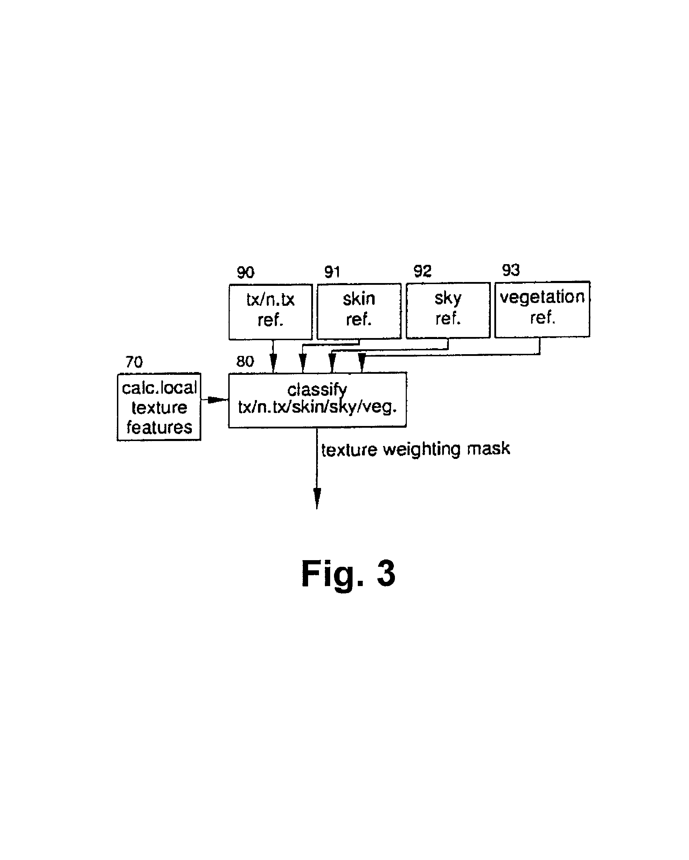

The modified workflow is depicted in Fig. 3. The classification step 80 is extended with additional references to skin, sky and vegetation. The main differences to the previous workflow are the additional references of skin, sky, and vegetation. This extends the two-class classification problem (texture/not texture) to a five-class problem (texture/not texture/skin/sky/vegetation). For those skilled in the art, the design of a classificator for such a problem is straightforward [A. Webb. Statistical Pattern Recognition. Arnold, 1999]. For a research paper on tackling the problem of describing memory colours using texture features see [G. Asendorf and Th. Hermes. On textures: An approach for a new abstract description language. In IS&T/SPIE's Symposium on Electronic Imaging: Science & Technology, January 28 - February 2, San Jose, CA, USA, 1996].

When taking into account memory colours, some parts of the image that previously have been classified as "textured" are now being classified as the corresponding memory colours and do not bias the calculation of the colour correction transformation (Fig. 1, 50).

## Claims

1. A method for correcting a colour image, wherein the image being represented by a plurality of colour values, the method comprising the steps of:

   determining local texture features of the image based on the colour values; and correcting the colour values based on the local texture features.

2. The method according to claim 1, wherein the colour values being respectively represented by a set of element values, each element value belonging to a colour channel; and,
   in the correcting step:

   the element values of the same colour channel are corrected in the same way; and/or the local texture features are determined based on the element values of different channels.

3. The method according to claim 1 or 2, wherein, in said correcting step:

   the colour values or the element values and the local texture features which relate to the same location are combined for performing the correction.

4. The method according to claim 3,
   wherein local information on critical scene content is provided and/or the image is analysed whether one or more regions represent a critical scene content, for instance a memory colour; and
   wherein the combination of the colour values or element values and local texture features locally depends on the local information and/or the results of the analysis.

5. The method as claimed in one of the preceding claims, wherein
   the texture features represent measures for the texture at locations in the image and, in said correcting step, the colour balance is corrected with respect to a target colour balance; wherein
   those colour values at locations with high measures of texture have a higher influence on the correction with respect to the target colour balance than colour values at locations with low measures of texture; and/or
   those colour values at locations with low measures of texture have a higher influence on a change of the target colour balance performed before the correction than colour values at locations with high measures of texture.

6. The method according to one of claims 1 to 5, wherein, in said correcting step:

   channel characteristics for the respective colour channels are determined based on the element values of the respective colour channel and the local textures, and the element values of the respective colour channel are corrected based on the channel characteristic of the respective colour channel and based on at least one predetermined reference relationship among the channel characteristics.

7. A Computer program which when loaded in a computer or when running on a computer causes the computer to perform the steps of one of claims 1 to 6.

8. A computer program storage medium comprising the computer program of claim 7, and/or signal wave carrying information corresponding to the computer program of claim 7.

9. Apparatus for adjusting the colour balance comprising a image data processing device for performing the method steps as claimed in one of claims 1 to 6 or comprising a computer on which the program of claim 7 is loaded and/or comprising a computer program storage medium of claim 8.

10. A colour printer, a photographic laboratory, or a digital video or still camera comprising the apparatus of claim 9, the computer program storage medium of claim 8 and/or the program of claim 7.

90
tx/n.tx
ref.

91,92,93
memcol.
ref.

60
convert
to lum.

70
calc.local
texture
features

80
classify
tx/n.tx

texture weighting mask

40
sample
down

50
calc.
factors

rgb color correction factors

10
input
unit

20
apply
factors

30
output
unit

# Fig. 1

luminance image

calculate local texture features, 70

texture features

classify into "textured"/"not textured", 80

texture weighting mask

# Fig. 2

90
91
92
93

| tx/n.tx ref. | skin ref. | sky ref. | vegetation ref. |

70

80

| calc.local texture features | classify tx/n.tx/skin/sky/veg. |

texture weighting mask

# Fig. 3

## EUROPEAN SEARCH REPORT

**European Patent Office**

**Application Number**

EP 02 02 0473

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 024 454 A (EASTMAN KODAK CO) 2 August 2000 (2000-08-02) * abstract * * page 2, line 44 - line 49 * * page 4, line 5 - line 10 * * page 4, line 42 - page 5, line 19 * --- | 1-10 | G06T5/20 |
| A | US 5 835 099 A (MARIMONT DAVID H) 10 November 1998 (1998-11-10) * abstract * * column 3, line 28 - line 47 * * column 13, line 7 - line 11 * --- | 1-10 | |
| A | EP 1 139 284 A (HEWLETT PACKARD CO) 4 October 2001 (2001-10-04) * abstract * * page 2, line 25 - line 30 * * page 4, line 10 - line 14 * ----- | 1-10 | |

**TECHNICAL FIELDS SEARCHED (Int.Cl.7)**

G06T

The present search report has been drawn up for all claims

| Place of search | Date of completion of the search | Examiner |
|---|---|---|
| THE HAGUE | 20 February 2003 | Gonzalez Ordonez, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 02 0473

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2003

| Patent document cited in search report | | Publication date | Patent family member(s) | | Publication date |
|---|---|---|---|---|---|
| EP 1024454 | A | 02-08-2000 | EP | 1024454 A2 | 02-08-2000 |
| | | | JP | 2000242778 A | 08-09-2000 |
| US 5835099 | A | 10-11-1998 | JP | 10091809 A | 10-04-1998 |
| EP 1139284 | A | 04-10-2001 | EP | 1139284 A2 | 04-10-2001 |
| | | | JP | 2001313844 A | 09-11-2001 |
| | | | US | 2002186387 A1 | 12-12-2002 |